# EUROPEAN PATENT APPLICATION

(11) **EP 4 725 812 A1**
(43) Date of publication of application: **15.04.2026**
(21) Application number: 24818847.6
(22) Date of filing: 30.05.2024
(51) Int. Cl.: B62D 51/02, B62D 51/04

(54) **MIXED-USE ARTICULATED MOTOR VEHICLE FOR VEHICULAR AND PEDESTRIAN TRAFFIC**

(30) Priority: 07.06.2023 ES 202330472
(71) Applicant: Genius Emobility Systems S.L., 28036 Madrid Madrid (ES)
(72) Inventor: CARRASCO VERGARA, Pablo, 28034 Madrid (ES)
(74) Representative: Reich, Jochen
(86) International application number: PCT/ES2024/070329
(87) International publication number: WO 2024/252044

(57) **Abstract**

Motorized articulated vehicle for mixed use for road and pedestrian traffic, formed by a cart (1) with two front free wheels (121, 122) and two fixed rear motorized wheels (111, 112) and a handlebar (13) fixed and set back with respect to the motorized wheels (111, 112), and by a rolling platform (2) having a footrest area (FPP) and two wheels (201, 202) of fixed geometry, positioned behind the cart (1) to which it is joined by a combined articulation (3) that allows yaw and pitch, which in road traffic mode is used unfolded and in pedestrian mode folded, said articulation (3) allowing relative rolling movement between the cart (1) and the rolling platform (2) through elastic deformation contributing to an anti-tip support.

## Description

The present invention applies to those carts whose frame has two front free wheels and two fixed rear motorized wheels, so that they have a single direction of advance and a single center of rotation when stationary, where a driver located behind the cart holds a handlebar to make it turn. In addition, said cart comprises, articulated behind the cart, a rolling platform with two wheels of fixed geometry, thus forming a motorized articulated vehicle.

In road traffic areas or others where this use is permitted even with possible speed restrictions, the driver stands on the rolling platform which is pulled from the cart. In pedestrian areas, the articulation between the cart and the rolling platform allows the folding of the vehicle so that it can be used in pedestrian mode with electric assistance to facilitate its pushing.

### STATE OF THE ART

In recent years, as online commerce gains more and more prominence, home delivery has grown enormously, and whether due to pollution or to the collapse of traffic in urban centers, the use of delivery carts has proliferated, particularly for what is called the "last mile" where conventional vehicles find increasing access difficulties.

A large part of that delivery is still carried out with small carts and manual trolleys with which one can reach the door of the home, but as commerce increasingly goes this way, interest increases in facilitating this task through carts or vehicles with electric assistance. The systems used are of two types, carts assisted with motors when the driver accompanies it walking, and motorized carts where the driver rides on it, but these, such as motor carts and cargo scooters, normally by legislation cannot be operated on sidewalks or access the interior of buildings and their elevators.

It should be noted that in the state of the art there are rolling platforms that are hooked behind a motorized cart, whether a wheelchair or even a lawnmower, such as US4828282. Such cases, of which numerous videos can be found on the internet, correspond to removable platforms to facilitate the transport of the driver, and in such case they behave as a vehicle with better or worse driving dynamics, but not optimized as a vehicle, and where moreover, to switch to pedestrian mode, the rolling platform has to be removed.

The problems to be solved are therefore focused on two aspects:
- The dynamic optimization of the assembly of a motorized load cart for pedestrian use, connected with a rolling platform that transports a driver, so that it can move at a speed significantly higher than in pedestrian use.
- Geometry of the complete system and in particular of the articulation between both components, which while allowing said optimization facilitates the change of mode between both uses, from road traffic to pedestrian and vice versa.

### SUMMARY OF THE INVENTION

The present invention represents an optimization of a vehicle comprising a cart whose frame has two front free wheels, two fixed rear motorized wheels so that they have a single direction of advance and a single center of rotation when stationary, and a fixed handlebar set back with respect to the motorized wheels, and further comprising a rolling platform having a footrest area and two wheels of fixed geometry, which is positioned behind the cart to which it is joined by a combined articulation, said platform being usable either unfolded, rolling on the ground to transport the driver, or folded, to allow pedestrian use of the cart.

It could be said that said combined articulation has two and a half degrees of freedom, one in yaw, which allows turning while driving, another also in pitch, which on one hand allows gradient changes and going up and down curbs, and on the other hand lifting the platform to fold it under the handlebar in a stable position, and finally it has an extra degree of freedom by deformation, necessarily restricted to allow a certain displacement, mainly elastic, of relative roll between both main elements of the vehicle, that is, a certain torsion that allows absorbing both asymmetric irregularities of the ground and any level change made obliquely, but in such a way that said torsion generates a force opposite to the relative roll displacement between the cart and the rolling platform, thus contributing to an anti-tip support.

This restricted degree of freedom will preferably be formed by a flexible joint of the silentblock type. The stiffness of said flexible joint contributes to the stability of the vehicle in curves for its use in road traffic, since it allows the weight of the driver on the rolling platform to contribute to the anti-tip support of the cart, normally loaded, in curves. In this respect, equally important is the use of two free wheels at the front of the cart, one on each side.

In addition, certain dimensions and proportions must be provided which make possible both a comfortable and safe driving of the vehicle in road traffic mode and that the change to pedestrian mode be simple and that the position adopted by the rolling platform once folded be stable until it can be secured by corresponding fixing means.

For this purpose we will consider the reference axes XYZ, X being the intersection with the ground of the vertical plane of symmetry of the cart, considered in the direction of advance, Y being the rolling axis on the ground of the motorized wheels of the cart, and Z being the vertical upward.

For the correct operation of the cart in both driving modes numerous factors come into play whose effects combine with the rest. The following factors must be within the following measurement ranges in millimeters (mm):
- Handlebar height: [1050,1250]; since it must be necessary and sufficient so that the grip of the handlebar is comfortable both when walking and when standing on the rolling platform.
- Handlebar setback: [220,270]; long enough to walk behind the cart without kicking or stepping on it, and to house under the handlebar the folded rolling platform without disturbing the driver, and short enough so that when turning in road traffic mode, the handlebar does not move significantly to the opposite side, which would force the driver to stretch toward the outside of the curve and would be affected by the corresponding centrifugal force.
- Height of the combined articulation: [200,260]; so that when folding the rolling platform, it remains at a sufficiently comfortable height to be held and secured by the driver without having to bend down.
- Setback of the combined articulation: [90,140]; short enough to guarantee the stability of the vehicle in a straight line at its maximum speed, accelerating and braking, and long enough to remain further back than the platform once folded, so that it stays up without being held by the driver while he performs some complementary action to secure it in that position by means of corresponding anchoring means.
- Setback of the footrest area on the platform: [550,650]; so that the position of the driver allows him to handle the handlebar with safety and ease of control, both of the handlebar itself, which steers the cart, and of the corresponding brake, acceleration, light, indicator, or horn controls.
- Setback of the axle of the wheels of the rolling platform: [600,700]; since the rolling axis is located behind the load represented by the weight of the driver, part of that weight is transferred to the cart through the combined articulation, so that it helps the driving wheels of the cart to have sufficient traction when the cart is unloaded.
- Height of the footrest area on the platform: [130,160]; it would be desirable to have here the lowest possible height so that the handlebar is not too low when the driver stands on it, but it requires a compromise solution since a sufficient level of damping and rolling quality on the rear wheels must be ensured, as well as sufficient height to avoid small obstacles.
- Total width of the cart: [615,715]; conditioned by the most common door width through which it must be able to pass comfortably.
- Width of the footrest area on the platform: [410,450]; so that the legs are not too close together as it would go against stability, but there is sufficient space to accommodate appropriate wheels and their corresponding brake systems, all without exceeding the total width of the cart.
- Forward offset of both pivot axes corresponding to the free wheels: [490,690]; since it determines the acceptable length of the cart and load capacity, and these factors determine the manageable inertia with this type of steering with front free wheels.
- Diameter of motorized wheels: [215,285]; so that having an acceptable rolling level and sufficient thrust given a moderate motor torque, it also has a contained height, maximizing the volume and weight of the load to be transported.

### BRIEF DESCRIPTION OF THE DRAWINGS

- FIG-1 shows a front perspective view of a motorized articulated vehicle for mixed use for road and pedestrian traffic, comprising a delivery cart (1) and a folding rolling platform (2). In this figure said motorized articulated vehicle is shown in configuration with the platform unfolded.
- FIG-2 shows a rear perspective view of the motorized articulated vehicle for mixed use for road and pedestrian traffic corresponding to FIG-1. On it the area corresponding to the combined articulation between the cart and the platform is marked as detail A.
- FIG-3 corresponds to said detail A in enlarged view.
- FIG-4A and FIG-4B show respective side views of the motorized articulated vehicle for mixed use for road and pedestrian traffic of FIG-1 in its two corresponding states of use.
- FIG-5A and FIG-5B show two plan views of the vehicle of FIG-1, motorized articulated for mixed use for road and pedestrian traffic, in its two corresponding states of use, the first corresponds to its straight driving, and the second shows a high degree of yaw in the rolling platform, as would correspond to a tight turn.

### DETAILED DESCRIPTION OF A PREFERRED EMBODIMENT

A motorized articulated vehicle for mixed use for road and pedestrian traffic is proposed, preferably for delivery and last mile tasks. The present invention represents an optimization of a vehicle comprising a cart (1) whose frame has two front free wheels (121, 122), two fixed rear motorized wheels (111, 112) so that they have a single direction of advance and a single center of rotation when stationary, and a handlebar (13) fixed and set back with respect to the motorized wheels (111, 112), and further comprising a rolling platform (2) having a footrest area (FPP) and two wheels (201, 202) of fixed geometry, positioned behind the cart (1) to which it is joined by a combined articulation (3). Said rolling platform (2) can be used unfolded, rolling on the ground to transport a driver, or folded in a stable position and secured by fixing means (321) to allow the pedestrian use of the vehicle.

Said fixing means (321) are located below the handlebar of the cart (1) at a sufficient distance to prevent the driver from having to bend down or make a significant effort in the operation of securing the use in pedestrian mode when the rolling platform (2) adopts its folded position. In a preferred embodiment said fixing means (321) are formed by a simple plate that is manually pivoted laterally.

Said combined articulation (3) has freedom of rotation in pitch (according to axis A3Y) by means of a transverse pivot axis (JY), which on one hand allows the vehicle to face gradient changes and to go up and down curbs, and on the other hand to lift the rolling platform (2) to fold it under the handlebar (13) until reaching a stable position, forward with respect to said axis (A3Y) so as not to fall by its weight, and furthermore, linked to the transverse pivot axis (JY), it has a vertical pivot axis (JZ) which allows turning when driving in road traffic mode, which gives it a yaw degree of freedom (according to axis A3Z), and furthermore, linked to the vertical pivot axis (JZ), it has a deformable element (JX) of the silentblock type which allows certain rolling movement between the cart (1) and the rolling platform (2), that is, a certain torsion according to the forward axis (AX3) of the rolling platform (2), allowing absorption of both asymmetric irregularities of the ground and any level change made obliquely.

In a preferred embodiment the main dimensions with a margin of ±5% are:
- Height of the handlebar: Z₁₃ = 1147 mm;
- Handlebar setback: X₁₃ = 246 mm;
- Height of the combined articulation: X₁₃ =231 mm;
- Setback of the combined articulation: X₃ = 115 mm;
- Setback of the footrest area on the platform: X_{FPP} = 600 mm;
- Setback of the axle of the wheels of the rolling platform: X₂ = 650 mm;
- Height of the footrest area on the platform: X_{FPP} = 144 mm;
- Total width of the cart: LY₁ = 665 mm;
- Width of the footrest area on the platform: LY_{FPP} = 430 mm;
- Forward offset of both pivot axes corresponding to the free wheels: X₁₂= 590 mm;
- Diameter of motorized wheels: D₁= 254 mm.

### OTHER EMBODIMENTS

With respect to the embodiment of the present invention described above, other modifications may be employed without departing from the scope of the present invention as defined by the appended claims. For example, some of said articulations, or all of them, could be materialized by flexible joints, and the size, shape, location, or orientation of the various components may also be varied. The components shown directly connected or in contact with each other may have intermediate structures arranged between them. The functions of one element may be performed by two, and vice versa. Therefore, the scope of the invention should not be limited by the specific embodiment described, but by the appended claims.

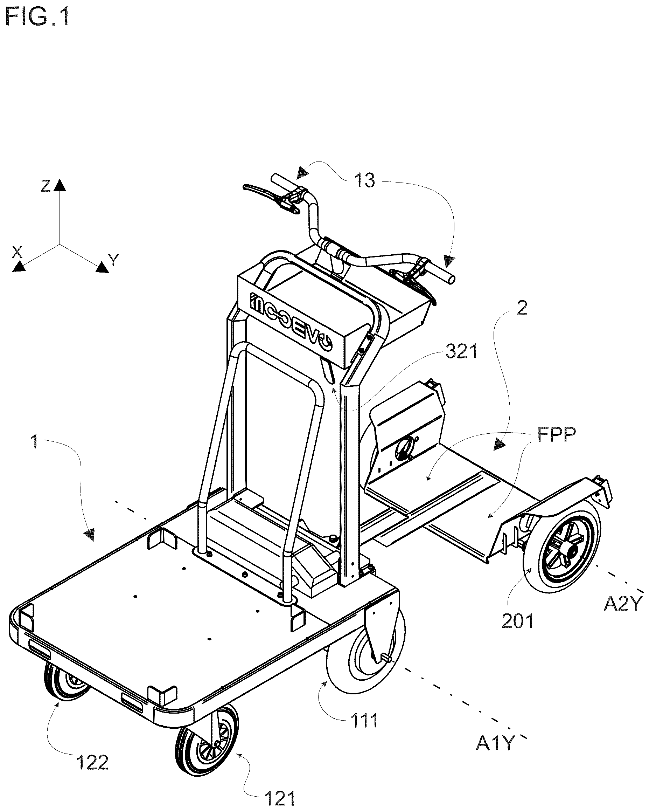

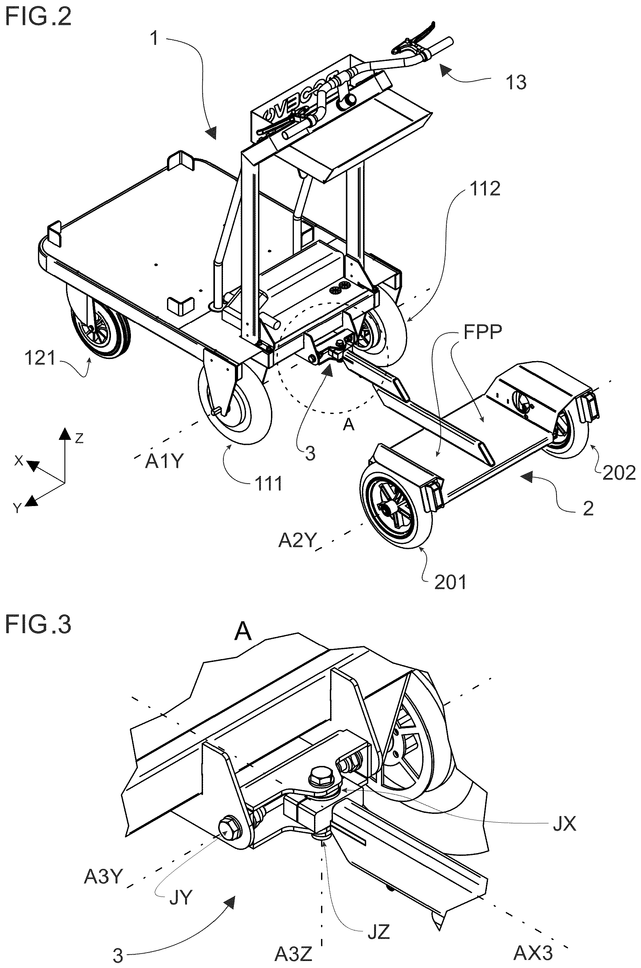

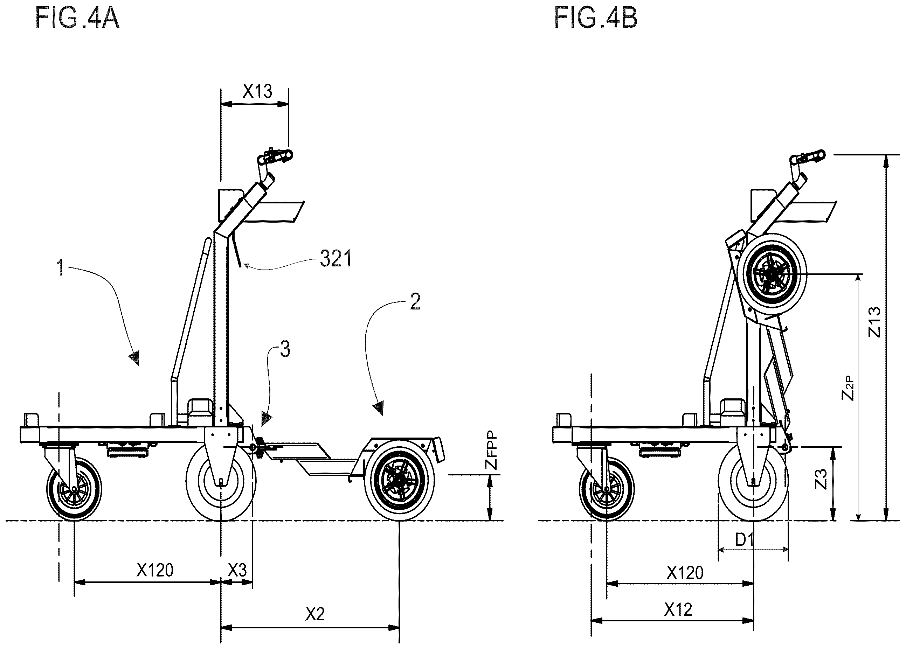

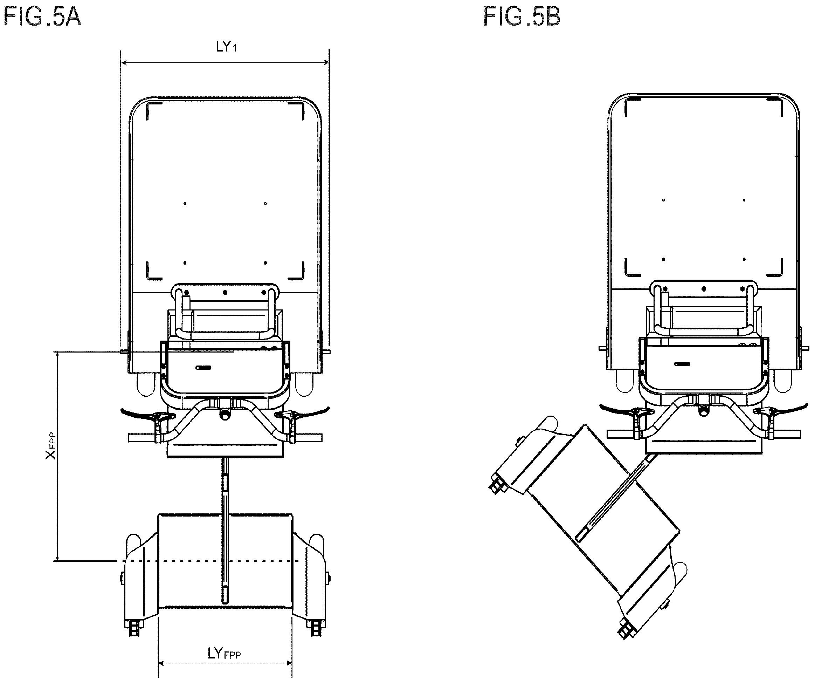

## Claims

1. A motorized articulated vehicle for mixed use for road and pedestrian traffic, comprising a cart (1) whose frame has two front free wheels (121, 122), two fixed rear motorized wheels (111, 112) so that they have a single direction of advance and a single center of rotation when stationary, and a handlebar (13) fixed and set back with respect to the motorized wheels (111, 112), and further comprising a rolling platform (2) having a footrest area (FPP) and two wheels (201, 202) of fixed geometry, positioned behind the cart (1) to which it is joined by a combined articulation (3);
wherein said combined articulation (3) has one degree of freedom in yaw, along the vertical (A3Z), which allows turning while driving, and another degree of freedom in pitch, along the transverse orientation (A3Y), which on one hand allows facing gradient changes as well as going up and down curbs, and on the other hand lifting the rolling platform (2) to fold it under the handlebar (13) in a stable position, forward with respect to said axis (A3Y) so as not to fall by its weight;
and wherein said combined articulation (3) further allows a certain torsion or relative rolling movement between the cart (1) and the rolling platform (2) that allows absorbing both asymmetric irregularities of the ground and level changes made obliquely, wherein said torsion is achieved mainly by elastic deformation that generates a force opposite to the relative rolling displacement between the cart (1) and the rolling platform (2), thus contributing to an anti-tip support.

2. The motorized articulated vehicle for mixed use for road and pedestrian traffic according to claim 1, wherein said combined articulation (3) has rotational freedom in pitch (according to axis A3Y) through a transverse pivot axis (JY), and linked to said transverse pivot axis (JY) it has a vertical pivot axis (JZ) that gives it a yaw degree of freedom (according to axis A3Z), and furthermore, linked to the vertical pivot axis (JZ), it has a deformable element of the silentblock type that allows a certain relative rolling movement between the cart (1) and the rolling platform (2), that is, a certain torsion along the forward axis (AX3) of the rolling platform (2).

3. The motorized articulated vehicle for mixed use for road and pedestrian traffic according to claim 1, considering the reference axes XYZ, where axis X corresponds to the intersection with the ground of the vertical plane of symmetry of the cart (1) in the direction of advance, axis Y corresponds to the rolling axis on the ground of the rear motorized wheels (111, 112), and axis Z to the vertical upward;
wherein its main dimensions in millimeters are:
• Height of the handlebar: Z₁₃ ∈ [1050,1250];
• Handlebar setback: X₁₃ ∈ [220,270];
• Height of the combined articulation: X₁₃ ∈ [200,260];
• Setback of the combined articulation: X₃ ∈ [90,140];
• Setback of the footrest area on the platform: X_{FPP} ∈ [550,650];
• Setback of the axle of the wheels of the rolling platform: X₂ ∈ [600,700];
• Height of the footrest area on the platform: Z_{FPP} ∈ [130,160];
• Total width of the cart: LY₁ ∈ [615,715];
• Width of the footrest area on the platform: : LY_{FPP} ∈ [410,450];
• Forward offset of both pivot axes corresponding to the free wheels: X₁₂ ∈ [490,690];
• Diameter of motorized wheels: D₁ ∈ [215,285];

4. Motorized articulated vehicle for mixed use for road and pedestrian traffic according to claim 3, wherein its main dimensions with a margin of ±5% are:
• Height of the handlebar: Z₁₃ = 1147 mm;
• Handlebar setback: X₁₃ = 246 mm;
• Height of the combined articulation: X₁₃ =231 mm;
• Setback of the combined articulation: X₃ = 115 mm;
• Setback of the footrest area on the platform: X_{FPP} = 600 mm;
• Setback of the axle of the wheels of the rolling platform: X₂ = 650 mm;
• Height of the footrest area on the platform: Z_{FPP} = 144 mm;
• Total width of the cart: LY₁ = 665 mm;
• Width of the footrest area on the platform: : LY_{FPP} = 430 mm;
• Forward offset of both pivot axes corresponding to the free wheels: X₁₂= 590 mm;
• Diameter of motorized wheels: D₁= 254 mm.
